# EUROPÄISCHE PATENTSCHRIFT

(11) **EP 2 271 494 B1**
(45) Veröffentlichungstag und Bekanntmachung des Hinweises auf die Patenterteilung: **27.02.2013**
(21) Anmeldenummer: 09741945.1
(22) Anmeldetag: 23.03.2009
(51) Int. Cl.: B41F 7/26, B41F 13/008, F16H 63/30

(54) **GETRIEBE EINES FEUCHTWERKS**
GEARBOX FOR A DAMPING SYSTEM
TRANSMISSION D'UN DISPOSITIF DE MOUILLAGE

(30) Priorität: 08.05.2008 DE 102008001651
(43) Veröffentlichungstag der Anmeldung: 12.01.2011
(73) Patentinhaber: ZF Friedrichshafen AG, 88038 Friedrichshafen (DE)
(72) Erfinder: RICHTER, Frank, 88094 Oberteuringen (DE); SCHMITZ, Ewald, 88718 Daisendorf (DE)
(86) Internationale Anmeldenummer: PCT/EP2009/053352
(87) Internationale Veröffentlichungsnummer: WO 2009/135727

(56) Entgegenhaltungen:
- DE-A1-102006 011 802
- DE-A1-102006 013 747
- US-B1- 6 846 267

## Beschreibung

Die vorliegende Erfindung betrifft ein Getriebe eines Feuchtwerks nach dem Oberbegriff des Anspruchs 1.

Für den Feuchtwerkantrieb von Druckmaschinen werden 2 Gang Getriebe eingesetzt, die lastfrei oder unter Last schaltbar sind. Bei den Lastschaltbaren Getrieben sind zwei Lamellenkupplungen mit einem Schaltzylinder zwischen zwei Losrädern angeordnet. Der Schaltzylinder wird durch eine Bohrung in der Welle mit Luft versorgt und betätigt beide Lamellenkupplungen. Voraussetzung für diese Bauweise ist ein genügend großer Bauraum zwischen den Losrädern, um Schaltelemente und Kupplungen unterzubringen.

Aus der DE 10 2006 013 747 A1 ist ein Getriebe einer Druckmaschine bekannt. Das Getriebe weist eine Antriebswelle und eine Abtriebswelle auf, welche mittels einer ersten und einer zweiten Zahnradstufe verbindbar sind. Jede Zahnradstufe entspricht je einem Gang, welcher mit einer ersten und einer zweiten Kupplung schaltbar ist. Eine elektronische Steuereinrichtung steuert das wechselweise Umschalten der Kupplungen. Eine Betätigungseinrichtung der Kupplungen ist nicht dargestellt.

Aufgabe der vorliegenden Erfindung ist es, ein kompaktes Getriebe eines Feuchtwerks darzustellen, wobei das Getriebe individuell betätigbare Kupplungen aufweisen soll.

Diese Aufgabe wird wie in Patentanspruch 1 angegeben gelöst. Vorteilhafte Weiterbildungen ergeben sich aus den Unteransprüchen.

Ausgehend von einem Getriebe der eingangs näher genannten Art, wird die Aufgabe durch eine erste und eine zweite Betätigungseinrichtung erfindungsgemäß gelöst. Die erste bzw. die zweite Betätigungseinrichtung ist der ersten bzw. der zweiten Kupplung derart zugeordnet, dass eine Betätigungskraft an die jeweilige Kupplung anbringbar ist. Die erste Betätigungseinrichtung ist innerhalb eines Stirnrads des Getriebes angeordnet. Die erste Betätigungseinrichtung bildet sich somit aus zwei Teilen, dem Stirnrad, welches als Schaltzylinder wirkt und einem in dem Schaltzylinder angeordneten Betätigungskolben. Zwischen dem Schaltzylinder und dem Betätigungskolben befindet sich eine Druckkammer, welche mit Dichtungen abgedichtet ist. Der Betätigungskolben dreht sich mit dem Stirnrad bzw. dem Schaltzylinder, wobei Dichtungen nur von axialen Bewegungen belastet sind. Somit sind Wellendichtringe zwischen dem Betätigungskolben und dem Stirnrad nicht notwendig. Einfachere und günstigere Dichtungen können die Wellendichtringe ersetzen, beispielsweise O-Ringe.

In einer Variante wird vorgeschlagen, dass das Stirnrad als ein Antriebsrad der Antriebswelle ausgebildet ist.

Des Weiteren wird vorgeschlagen, dass die zweite Betätigungsanordnung drehfest an einem Gehäuse angeordnet ist. Die Betätigungskraft wird über ein Wälzlager der Antriebswelle zu der zweiten Kupplung übertragen. Die Betätigungsanordnung umfasst einen Schaltzylinder, welcher mit einem Betätigungskolben einen Druckraum bildet. Der Betätigungskolben wirkt wahlweise auf den Außenring oder Innenring des Wälzlagers, welches auf einer drehfesten aber seitlich verschiebbaren Aufnahme an der Antriebswelle ortsfest angeordnet ist. Die Aufnahme überträgt die Betätigungskraft auf die Kupplung. Da keine Drehbewegung zwischen dem Schaltzylinder und dem Betätigungskolben vorkommt, können die Dichtungen der zweiten Betätigungseinrichtung auch von günstigen Varianten wie beispielsweise O-Ringen sein.

Durch die Anordnung der ersten Betätigungseinrichtung innerhalb eines Stirnrades des Getriebes, wird eine kompakte Bauweise des Getriebes erreicht. Des Weiteren sind die beiden Kupplungen unabhängig voneinander schaltbar, da jede Kupplung eine zugeordnete Betätigungseinrichtung aufweist.

Vorteilhafterweise sind die Kupplungen innerhalb eines ersten und eines zweiten Stirnrads der ersten bzw. zweiten Zahnradstufe der Antriebswelle angeordnet.

Um das Getriebe so kompakt wie möglich zu gestalten wird weiter vorgeschlagen, dass die zwei Zahnradstufen unmittelbar nebeneinander angeordnet sind. Dies wird dadurch ermöglicht, dass die Kupplungen innerhalb der Stirnräder angeordnet sind und die jeweilige Betätigungseinrichtung im Stirnrad bzw. im Gehäuse untergebracht ist. Somit nehmen die Kupplungen keinen oder nur geringen zusätzlichen axialen Bauraum in Anspruch und eine besondere kompakte Bauweise des Getriebes wird ermöglicht.

Die Kupplungen können sowohl reibschlüssig als auch formschlüssig ausgebildet sein obwohl reibschlüssige Kupplungen bevorzugt sind. In einer besonders vorteilhaften Ausführungsform sind die Kupplungen als Lamellenkupplungen ausgebildet.

Zum Schluss wird vorgeschlagen, dass die Betätigungseinrichtungen pneumatisch oder hydraulisch betätigbar sind. Eine pneumatische Betätigung ist bevorzugt.

Weitere Vorteile der Erfindung und vorteilhafte Weiterbildungen ergeben sich aus einem unter Bezugnahme auf die Zeichnungen prinzipmäßig beschriebenem Ausführungsbeispiel. In das Ausführungsbeispiel sind nur die für die Erfindung wesentlichen Merkmale im Detail beschrieben und somit werden standardgemäße Konstruktionslösungen nicht näher dargestellt oder geschildert.

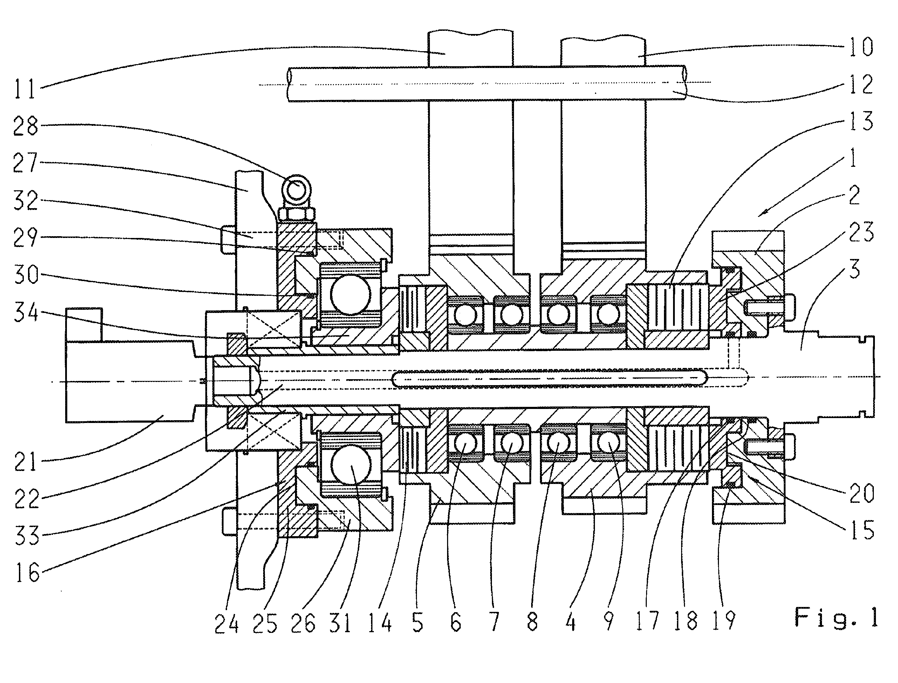

Die einzige Figur zeigt ein schematisch dargestelltes erfindungsgemäßes Getriebe 1 mit einem Antriebsrad 2 auf einer Antriebswelle 3. Das Antriebsrad 2 ist drehfest mit der Antriebswelle 3 verbunden. Auf der Antriebswelle 3 sind ein erstes Zahnrad 4 und ein zweites Zahnrad 5 vorhanden, welche drehbar mittels die Lagern 6, 7, 8, 9 auf der Antriebswelle 3 angeordnet sind. Die Zahnräder 4, 5 kämmen mit den Zahnrädern 10, 11 auf der Abtriebswelle 12 des Getriebes 1 und bilden zusammen die erste und die zweite Zahnradstufe des Getriebes 1. Eine erste und eine zweite Kupplung 13, 14 steuert eine Zuschaltung der jeweiligen Zahnradstufe. Durch eine Zuschaltung der ersten Zahnradstufe wird ein erster Gang eingelegt und durch eine Zuschaltung der zweiten Zahnradstufe wird ein zweiter Gang eingelegt. Die Kupplungen 13, 14 sind unabhängig von einander schaltbar und werden jeweils von einer Betätigungseinrichtung 15, 16 betätigt.

Die erste Betätigungseinrichtung 15 betätigt die erste Kupplung 13 und ist innerhalb des Antriebsrads 2 angeordnet. Somit bildet das Antriebsrad 2 eine Art von Schaltzylinder, da ein Betätigungsdruck zum Bewegen des Betätigungskolbens 23 in einem Druckraum 20 zwischen dem Betätigungskolben 23 und dem Antriebsrad 2 aufgebaut wird. Dichtungen 17, 18, 19 sind zwischen dem Schaltkolben 23 und dem Antriebsrad 2 angeordnet um den Druckraum 20 abzudichten. Da die Dichtungen 17, 18, 19 nicht durch Drehbewegungen belastet sind, können einfache und günstige O-Ringe als Dichtungen benutzt werden. Das Druckmedium wird von einer Drehdurchführung 21 in eine Bohrung 22 der Antriebswelle 3 eingeführt. Die Drehdurchführung 21 ist eine Druckmittelzufuhr, die sieht vor, dass das Druckmittel in einer drehbaren Welle eingeführt werden können. Die Bohrung 22 führt das Druckmedium zu dem Druckraum 20.

Die zweite Kupplung 14 wird mittels der zweiten Betätigungseinrichtung 16 bedient, welche ein Schaltzylinder 25 mit einem Druckraum 24 und einem Betätigungskolben 26 umfasst. Zwischen dem Schaltzylinder 25 und der Betätigungskolbens 26 sind Dichtungen 29, 30 angeordnete, um den Druckraum 24 abzudichten. Der Schaltzylinder 25 ist drehfest an einem Gehäuse 27 angeordnet und eine Druckmittelzufuhr 28 ist an dem Druckzylinder 25 vorgesehen. Der Betätigungskolben 26 wirkt als Lagerhalterung für das Wälzlager 31, welches die Drehbewegungen zwischen der Aufnahme 34 und dem Betätigungskolben 26 entkoppelt. Ein Bolzen bzw. ein Stift 32 sichert den Betätigungskolben 26 gegen eine Verdrehung gegenüber dem Schaltzylinder 25, wobei eine axiale Bewegung des Betätigungskolbens 26 nicht von dem Bolzen bzw. dem Stift 32 verhindert wird. Das Wälzlager 31 ist drehfest auf einer Aufnahme 34 angeordnet, welche mit einer Spielpassung an einer Hülse 33 der Antriebswelle 3 angeordnet ist. Somit kann das Wälzlager 31 die Betätigungskraft zur zweiten Kupplung 14 übertragen. Da das Wälzlager 31 zwischen dem Schaltzylinder 25 und der Kupplung 14 angeordnet ist, werden die Dichtungen 29, 30 nicht mit Drehbewegungen belastet. Somit können auch hier einfache und günstige Dichtungen, beispielsweise O-Ringe benutzt werden.

Durch die Betätigungseinrichtung des erfindungsgemäßen Getriebes kann das Getriebe besonders kompakt und günstig dargestellt werden. Die Kompaktheit wird dadurch erreicht, dass eine erste Betätigungseinrichtung des Getriebes innerhalb eines Stirnrads des Getriebes angeordnet ist und eine zweite Betätigungseinrichtung ortsfest an dem Gehäuse angeordnet ist. Kosten werden dadurch gespart, dass einfache und somit günstige Dichtungen, beispielsweise O-Ringe, benutzt werden können, statt der teueren Wellendichtringe.

### Bezugszeichen

- 1: Getriebe
- 2: Antriebsrad
- 3: Antriebswelle
- 4: Zahnrad
- 5: Zahnrad
- 6: Lagerung
- 7: Lagerung
- 8: Lagerung
- 9: Lagerung
- 10: Zahnrad
- 11: Zahnrad
- 12: Abtriebswelle
- 13: Kupplung
- 14: Kupplung
- 15: Betätigungseinrichtung
- 16: Betätigungseinrichtung
- 17: Dichtung
- 18: Dichtung
- 19: Dichtung
- 20: Druckraum
- 21: Drehdurchführung
- 22: Bohrung
- 23: Betätigungskolben
- 24: Druckraum
- 25: Schaltzylinder
- 26: Betätigungskolben
- 27: Gehäuse
- 28: Druckmittelzufuhr
- 29: Dichtung
- 30: Dichtung
- 31: Wälzlager
- 32: Bolzen/Stift
- 33: Hülse
- 34: Aufnahme

## Patentansprüche

1. Getriebe (1) eines Feuchtwerks, wobei das Getriebe (1) eine Antriebswelle (3) und eine Abtriebswelle (12) aufweist, welche mittels einer ersten und einer zweiten Zahnradstufe verbindbar sind, welche je einem Gang entspricht und welche mit einer ersten und einer zweiten Kupplung (13, 14) zuschaltbar sind, **dadurch gekennzeichnet, dass** der ersten bzw. der zweiten Kupplung (13, 14) eine erste und eine zweite Betätigungseinrichtung (15, 16) derart zugeordnet ist, dass eine Betätigungskraft an den jeweiligen Kupplungen (13, 14) anbringbar ist und die erste Betätigungseinrichtung (15) innerhalb eines Stirnrads (2) des Getriebes (1) angeordnet ist.

2. Getriebe nach Anspruch 1, **dadurch gekennzeichnet, dass** das Stirnrad (2) als ein Antriebsrad der Antriebswelle (3) ausgebildet ist.

3. Getriebe nach Anspruch 1 oder 2, **dadurch gekennzeichnet,**
**dass** die zweite Betätigungseinrichtung (16) ortsfest an einem Gehäuse (27) angeordnet ist.

4. Getriebe nach einem der Ansprüche 1 bis 3, dadurch **gekennzei chnet**, dass eine Betätigungskraft von der zweiten Betätigungseinrichtung (16) über ein Wälzlager (31) auf die zweite Kupplung (14) übertragbar ist.

5. Getriebe nach Anspruch 4, **dadurch gekennzeichnet, dass** das Wälzlager (31) auf einer mit Spielpassung zu der Antriebswelle (3) angeordneten Aufnahme (34) angeordnet ist.

6. Getriebe nach einem der Ansprüche 1 bis 5, dadurch **gekennzei chnet**, dass die erste und die zweite Kupplung (13, 14) innerhalb von einem ersten und einem zweiten Stirnrad (4, 5) der ersten bzw. der zweiten Zahnradstufe der Antriebswelle (3) angeordnet sind.

7. Getriebe nach einem der Ansprüche 1 bis 6, dadurch **gekennzei chnet**, dass die Zahnradstufen unmittelbar nebeneinander angeordnet sind.

8. Getriebe nach einem der Ansprüche 1 bis 7, dadurch **gekennzei chnet**, dass die Kupplungen (13, 14) als Lamellenkupplungen ausgebildet sind.

9. Getriebe nach einem der Ansprüche 1 bis 8, dadurch **gekennzei chnet**, dass ein Druckraum (20, 24) der Betätigungseinrichtungen (15, 16) mit Dichtungen (17, 18, 19, 29, 30) derart abgedichtet ist, dass die Dichtungen (17, 18, 19, 29, 30) zwischen zwei gegenüber einander drehfeste Teile angeordnet sind.

10. Getriebe nach einem der Ansprüche 1 bis 9, dadurch **gekennze ichnet** , dass die Betätigungseinrichtungen (15, 16) pneumatisch oder hydraulisch betätigbar sind.

## Claims

1. Gearbox (1) of a dampening unit, the gearbox (1) having a drive shaft (3) and an output shaft (12) which can be connected by means of a first and a second gearwheel stage which in each case correspond to one gear and which can be switched in by way of a first and a second clutch (13, 14), **characterized in that** the first and the second clutch (13, 14) are assigned a first and a second actuating device (15, 16) in such a way that an actuating force can be applied to the respective clutches (13, 14) and the first actuating device (15) is arranged within a spur gear (2) of the gearbox (1).

2. Gearbox according to Claim 1, **characterized in that** the spur gear (2) is configured as a drive gear of the drive shaft (3).

3. Gearbox according to Claim 1 or 2, **characterized in that** the second actuating device (16) is arranged in a stationary manner on a housing (27).

4. Gearbox according to one of Claims 1 to 3, **characterized in that** an actuating force can be transmitted from the second actuating device (16) via an anti-friction bearing (31) to the second clutch (14).

5. Gearbox according to Claim 4, **characterized in that** the anti-friction bearing (31) is arranged on a seat (34) which is arranged with a clearance fit with respect to the drive shaft (3).

6. Gearbox according to one of Claims 1 to 5, **characterized in that** the first and the second clutches (13, 14) are arranged within a first and a second spur gear (4, 5) of the first and the second gearwheel stage of the drive shaft (3).

7. Gearbox according to one of Claims 1 to 6, **characterized in that** the gearwheel stages are arranged immediately next to one another.

8. Gearbox according to one of Claims 1 to 7, **characterized in that** the clutches (13, 14) are configured as multiple disc clutches.

9. Gearbox according to one of Claims 1 to 8, **characterized in that** a pressure space (20, 24) of the actuating devices (15, 16) is sealed by way of seals (17, 18, 19, 29, 30) in such a way that the seals (17, 18, 19, 29, 30) are arranged between two parts which are fixed rotationally with respect to one another.

10. Gearbox according to one of Claims 1 to 9, **characterized in that** the actuating devices (15, 16) can be actuated pneumatically or hydraulically.

## Revendications

1. Transmission (1) d'un dispositif de mouillage, dans laquelle la transmission (1) présente un arbre d'entraînement (3) et un arbre de sortie (12), qui peuvent être connectés au moyen d'un premier et d'un deuxième étage à roue dentée qui correspondent chacun à une vitesse et qui peuvent être raccordés à un premier et un deuxième embrayage (13, 14), **caractérisée en ce qu'**au premier ou au deuxième embrayage (13, 14) est associé un premier, respectivement un deuxième dispositif d'actionnement (15, 16), de telle sorte qu'une force d'actionnement puisse être appliquée aux embrayages respectifs (13, 14), et le premier dispositif d'actionnement (15) est disposé à l'intérieur d'un pignon droit (2) de la transmission (1).

2. Transmission selon la revendication 1, **caractérisée en ce que** le pignon droit (2) est réalisé sous forme de roue d'entraînement de l'arbre d'entraînement (3).

3. Transmission selon la revendication 1 ou 2, **caractérisée en ce que** le deuxième dispositif d'actionnement (16) est disposé fixement sur un boîtier (27).

4. Transmission selon l'une quelconque des revendications 1 à 3, **caractérisée en ce qu'**une force d'actionnement peut être transmise depuis le deuxième dispositif d'actionnement (16) par le biais d'un palier à roulement (31) au deuxième embrayage (14).

5. Transmission selon la revendication 4, **caractérisée en ce que** le palier à roulement (31) est disposé sur un logement (34) disposé avec un ajustement avec jeu par rapport à l'arbre d'entraînement (3).

6. Transmission selon l'une quelconque des revendications 1 à 5, **caractérisée en ce que** le premier et le deuxième embrayage (13, 14) sont disposés à l'intérieur d'un premier et d'un deuxième pignon droit (4, 5) du premier, respectivement du deuxième étage à roue dentée de l'arbre d'entraînement (3).

7. Transmission selon l'une quelconque des revendications 1 à 6, **caractérisée en ce que** les étages à roue dentée sont disposés l'un à côté de l'autre.

8. Transmission selon l'une quelconque des revendications 1 à 7, **caractérisée en ce que** les embrayages (13, 14) sont réalisés sous forme d'embrayages à disques.

9. Transmission selon l'une quelconque des revendications 1 à 8, **caractérisée en ce qu'**un espace de pression (20, 24) des dispositifs d'actionnement (15, 16) est étanchéifié avec des garnitures d'étanchéité (17, 18, 19, 29, 30) de telle sorte que les garnitures d'étanchéité (17, 18, 19, 29, 30) soient disposées entre deux parties solidaires en rotation opposées l'une à l'autre.

10. Transmission selon l'une quelconque des revendications 1 à 9, **caractérisée en ce que** les dispositifs d'actionnement (15, 16) peuvent être actionnés pneumatiquement ou hydrauliquement.
